# DEMANDE DE BREVET EUROPEEN

(11) **EP 0 805 361 A1**
(43) Date de publication de la demande: **05.11.1997**
(21) Numéro de dépôt: 97400953.2
(22) Date de dépôt: 28.04.1997
(51) Int. Cl.: G01S 15/89, G01S 7/52

(54) **Procédé de mesure d'angle dans l'espace, par balayage d'un faisceau ultrasonore**

(30) Priorité: 29.04.1996 FR 9605367
(71) Demandeur: IMRA EUROPE S.A., F-06560 Valbonne (FR)
(72) Inventeur: Bonnefoy, Pierre, 06800 Cagnes Sur Mer (FR)
(74) Mandataire: Leszczynski, André

(57) **Abrégé**

Procédé pour mesurer un angle (u) dans l'espace par rapport à une direction de référence (Do).
- On place un émetteur à réseau de transducteurs dans une position connue par rapport à la direction de référence,
- on excite les transducteurs du réseau de manière à émettre des ondes ultrasonores dans l'air principalement suivant une direction de tir,
- par déphasage entre les signaux d'excitation des transducteurs du réseau, on fait varier la direction du tir pour lui faire balayer une zone d'observation donnée, tout en mesurant l'amplitude de l'écho reçu au voisinage de l'émetteur,
- et on détermine l'angle (u) recherché à partir de la position connue de l'émetteur par rapport à la position de référence (Do), et de la direction du tir au moment où l'amplitude de l'écho est maximale.

## Description

La présente invention concerne un procédé de mesure d'angle dans l'espace, par balayage d'un faisceau ultrasonore émis dans l'air.

La présente invention trouve notamment son application dans le domaine de la robotique, par exemple pour localiser des objets dans un espace ou pour positionner un robot mobile par rapport à certains points de référence de cet espace.

Comme dispositif permettant de déterminer la position d'un objet, on connaît déjà celui décrit dans EP-A-0 148 952 qui comprend un élément pour émettre des ondes ultrasonores en direction d'un objet et pour recevoir des ondes réfléchies par cet objet, et un organe moteur qui est apte à faire osciller ledit élément autour d'un axe pour que les ondes ultrasonores émises par l'élément balayent une zone de détection dans laquelle se situe l'objet.

Ce dispositif antérieur présente notamment l'inconvénient de comporter des pièces mobiles, ce qui rend sa fabrication relativement coûteuse, et ne permet pas d'atteindre une rapidité et une précision de détection satisfaisantes.

La présente invention vise à fournir un procédé qui évite ces problèmes et qui permet d'atteindre une précision élevée, qui peut être facilement de un degré.

La présente invention a pour objet un procédé pour mesurer un angle dans l'espace par rapport à une direction de référence, qui est caractérisé par le fait
- que l'on place un émetteur à réseau de transducteurs dans une position connue par rapport à la direction de référence,
- que l'on excite les transducteurs du réseau de manière à émettre des ondes ultrasonores dans l'air principalement suivant une direction de tir,
- que, par déphasage entre les signaux d'excitation des transducteurs du réseau, on fait varier la direction du tir pour lui faire balayer une zone d'observation donnée, tout en mesurant l'amplitude de l'écho reçu au voisinage de l'émetteur,
- et que l'on détermine l'angle recherché à partir de la position connue de l'émetteur par rapport à la position de référence, et de la direction du tir au moment où l'amplitude de l'écho est maximale.

Le procédé selon l'invention présente notamment l'avantage que la directivité du tir peut être très grande, c'est-à-dire que le tir peut être très étroit ou fin, grâce au réseau de transducteurs qui permet d'obtenir un tir dont l'angle d'ouverture est d'autant plus petit que le diamètre global du capteur est grand, ou plus généralement que sa grande dimension, qui dépend du nombre de transducteurs, est grande.

En outre, en créant électroniquement un déphasage entre les signaux d'excitation des transducteurs du réseau on peut effectuer le balayage de la zone de détection tout en maintenant l'émetteur dans une position fixe et ce, avec une grande rapidité, par exemple en une période de l'ordre de 100 ms à 1 m de distance entre le capteur et l'obstacle et pour 10 tirs.

Ainsi, selon l'invention, il suffit de recueillir l'écho des ondes ultrasonores et de l'analyser uniquement en ce qui concerne son amplitude, sans se préoccuper de sa forme ni de sa direction de retour.

Dans un premier mode de mise en oeuvre de l'invention, le procédé est utilisé pour la détermination de la position angulaire d'un objet dans l'espace par rapport à la direction de référence.

Dans ce premier mode de mise en oeuvre, l'objet est assimilé à un point ou est considéré comme ne présentant qu'un seul point de réflexion maximale.

Selon ce mode de mise en oeuvre, on place l'émetteur à réseau de transducteurs perpendiculairement à la direction de référence et l'on exécute les étapes du procédé défini ci-dessus.

Dans un second mode de mise en oeuvre de l'invention, le procédé est utilisé pour la détermination de l'orientation d'une surface sensiblement plane par rapport à la direction de référence.

Dans ce second mode de mise en oeuvre, on place l'émetteur à réseau de transducteurs parallèlement à la direction de référence et l'on exécute les étapes du procédé défini ci-dessus, l'angle recherché étant l'angle formé par la surface et la direction de référence.

On comprend que, dans ce second mode de mise en oeuvre, l'amplitude de l'écho est maximale lorsque la direction du tir est normale à la surface plane.

Pour obtenir une mesure significative, il est nécessaire que la surface plane offre des conditions de réflexion particulières pour l'onde ultrasonore. En particulier, il faut que la surface soit lisse afin d'éviter les diffractions.

Ce second mode de mise en oeuvre peut, par exemple, être utilisé pour guider un robot mobile, en vérifiant que la direction selon laquelle le robot se déplace demeure parallèle audit mur.

Pour mettre en oeuvre l'invention, on peut utiliser un émetteur à réseau de transducteurs à une seule dimension, c'est-à-dire dans lequel une pluralité de transducteurs sont alignés suivant un axe X et sont orientés de manière à émettre chacun une onde sonore dans une direction Y perpendiculaire à l'axe X.

Dans ce cas, l'onde ultrasonore émise par l'émetteur comporte un lobe principal et des lobes secondaires, chaque lobe étant constitué par une nappe qui s'étend sensiblement suivant un plan de tir passant par le centre du capteur et parallèle à un axe Z perpendiculaire aux axes X et Y.

En réalisant un déphasage entre les signaux d'excitation des transducteurs, on fait tourner le plan de tir de chaque lobe autour de l'axe Z.

Conformément à l'invention, on peut également utiliser un émetteur à réseau de transducteurs à deux dimensions.

Dans ce cas, les transducteurs sont de préférence placés au noeud d'un réseau régulier à mailles triangulaires ou carrées.

De préférence, le réseau est constitué par une pluralité d'alignements de transducteurs, alignements dont les axes se croisent au centre d'un transducteur central commun.

Si l'on excite tous les transducteurs d'un tel réseau, on obtient une onde ultrasonore qui présente un lobe principal de révolution, dont l'angle d'ouverture est d'autant plus petit que le diamètre global de l'émetteur est grand pour une fréquence donnée.

Quand le réseau de transducteurs est utilisé dans une seule dimension, la zone de recherche ou de balayage n'est disponible que dans deux dimensions, à savoir selon les directions X et Y, et quand le réseau de transducteurs est utilisé dans deux dimensions, la zone de recherche ou de balayage est disponible dans trois dimensions, à savoir selon les directions X, Y et Z.

Dans un mode de mise en oeuvre particulier de l'invention, on pondère la puissance fournie à chaque transducteur, c'est-à-dire la puissance de l'onde émise par chaque transducteur du réseau, ce qui permet de modifier la distribution des lobes.

On peut ainsi adapter l'écartement des lobes à la taille de l'objet dont on cherche à déterminer la position angulaire ou à l'aptitude de la surface, dont on cherche à déterminer l'orientation, à réfléchir les ondes ultrasonores sans les diffracter.

Cette adaptation permet d'optimiser le procédé pour une taille donnée d'objet ou pour une résolution maximale.

Dans le but de mieux faire comprendre l'invention, on va en décrire maintenant des modes de réalisation donnés à titre d'exemples non limitatifs, en référence au dessin annexé dans lequel :
- la figure 1 est une vue de face d'un capteur à réseau de transducteurs,
- la figure 2 est une vue en coupe selon II-II de la figure 1 représentant la distribution spatiale énergétique des ondes ultrasonores émises par l'émetteur,
- la figure 3 est une vue en coupe selon le plan P2 de la figure 2 représentant la distribution spatiale énergétique des ondes ultrasonores émises par l'émetteur,
- la figure 4 représente l'émetteur émettant un signal dans un milieu pour détecter la position angulaire d'un objet,
- la figure 5 est une vue analogue à la figure 4 montrant le balayage du milieu,
- la figure 6 est une représentation graphique de l'amplitude de l'écho recueilli lors du balayage,
- la figure 7 est une vue analogue à la figure 5 montrant un autre objet,
- la figure 8 est une représentation graphique de l'amplitude de l'écho recueilli lors du balayage de la figure 7,
- la figure 9 représente l'émetteur devant un mur,
- la figure 10 est une représentation graphique de l'amplitude de l'écho recueilli lors du balayage devant le mur,

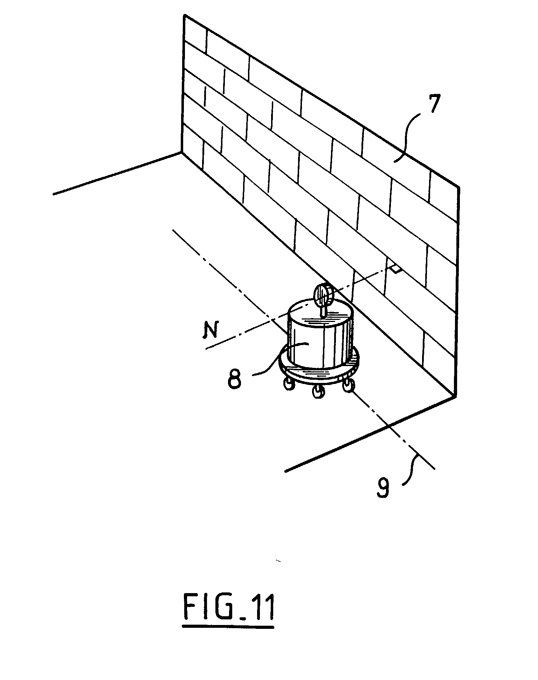

- la figure 11 représente un robot mobile se déplaçant le long d'un mur,
- la figure 12 représente la distribution énergétique des ondes ultrasonores émises par un émetteur avec une égale pondération de ses transducteurs,
- la figure 13 représente la distribution énergétique des ondes ultrasonores émises par le même émetteur avec une pondération appropriée de ses transducteurs, et
- la figure 14 représente la distribution spatiale d'une onde ultrasonore émise par un émetteur comportant des transducteurs répartis suivant trois axes coplanaires et sécants.

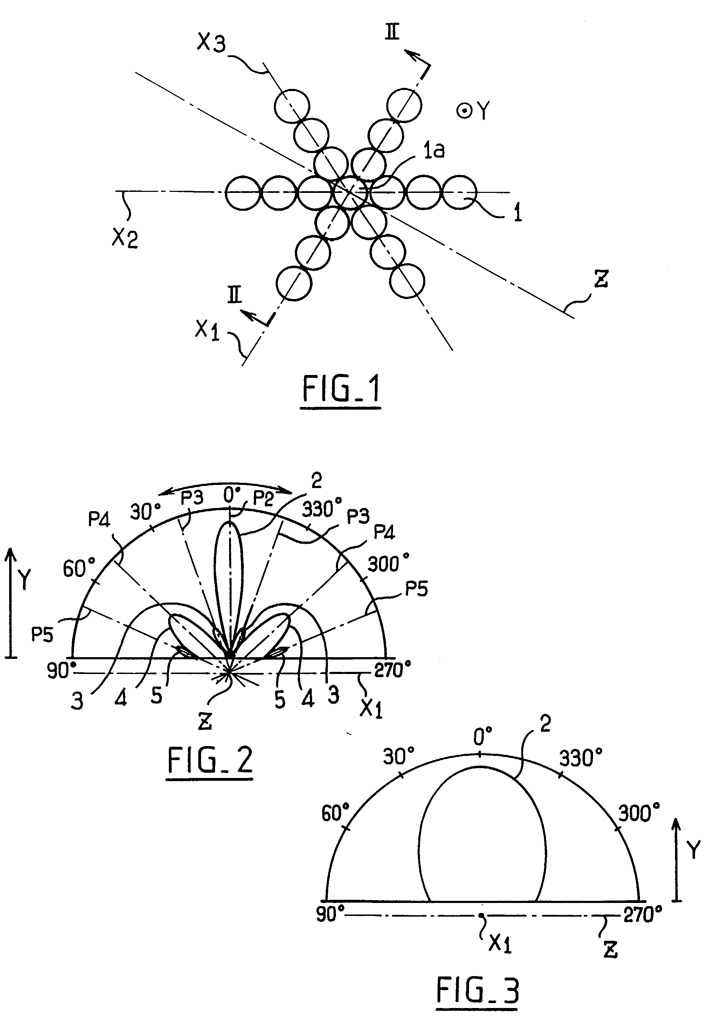

L'émetteur représenté sur la figure 1 comporte des transducteurs 1 alignés suivant trois axes coplanaires X1, X2, X3 formant deux à deux un angle de 60° et sécants au centre d'un transducteur central 1a.

Tous les transducteurs 1 sont orientés de manière à émettre dans une même direction Y, perpendiculaire aux axes X1, X2, X3.

En utilisation, cet émetteur peut être alimenté de manière à n'émettre qu'à partir des transducteurs situés sur l'axe X1. Il est alors considéré comme un émetteur à réseau de transducteurs à une seule dimension.

Lors de l'émission, il se crée des interférences entre les ondes ultrasonores émises par les transducteurs de l'axe X1, d'où il résulte une onde ultrasonore globale divisée en une pluralité de volumes minces désignés lobes, qui se situent chacun autour de son propre plan de tir, tous les plans de tir passant par un même axe Z traversant le centre de l'émetteur et perpendiculaire aux axes X1 et Y.

Sur la figure 2, qui représente une coupe de ces lobes, prise dans un plan II-II perpendiculaire à l'axe Z, on voit clairement apparaître un lobe central principal 2 qui présente un angle d'ouverture d'environ 20° et des lobes secondaires 3, 4 et 5 répartis de part et d'autre du lobe principal.

Les plans de tir P2, P3, P4 et P5 des différents lobes 2, 3, 4 et 5 se coupent sur l'axe Z.

Sur la figure 3, qui représente une vue en coupe du lobe principal 2 prise dans son plan de tir P2, on voit que ce lobe principal présente une enveloppe plus étendue, dont l'angle d'ouverture est d'environ 100°.

Il en va de même des lobes secondaires 3,4 et 5 mais leur puissance est inférieure à celle du lobe principal.

En faisant varier les déphasages entre les signaux d'excitation des transducteurs de l'axe X1, on modifie l'orientation des plans de tir P2 à P5, lesquels tournent alors autour de l'axe Z, comme indiqué par la double flèche sur la figure 2. Simultanément, la distribution spatiale énergétique des lobes se modifie, certains lobes devenant plus importants, d'autres disparaissant presque totalement. Néanmoins, le lobe principal demeure le plus significatif.

De manière connue, la directivité des lobes peut être accrue, ce qui revient à réduire leur angle d'ouverture dans le plan perpendiculaire à l'axe Z, en augmentant le nombre de transducteurs excités sur l'axe X1 pour une fréquence donnée.

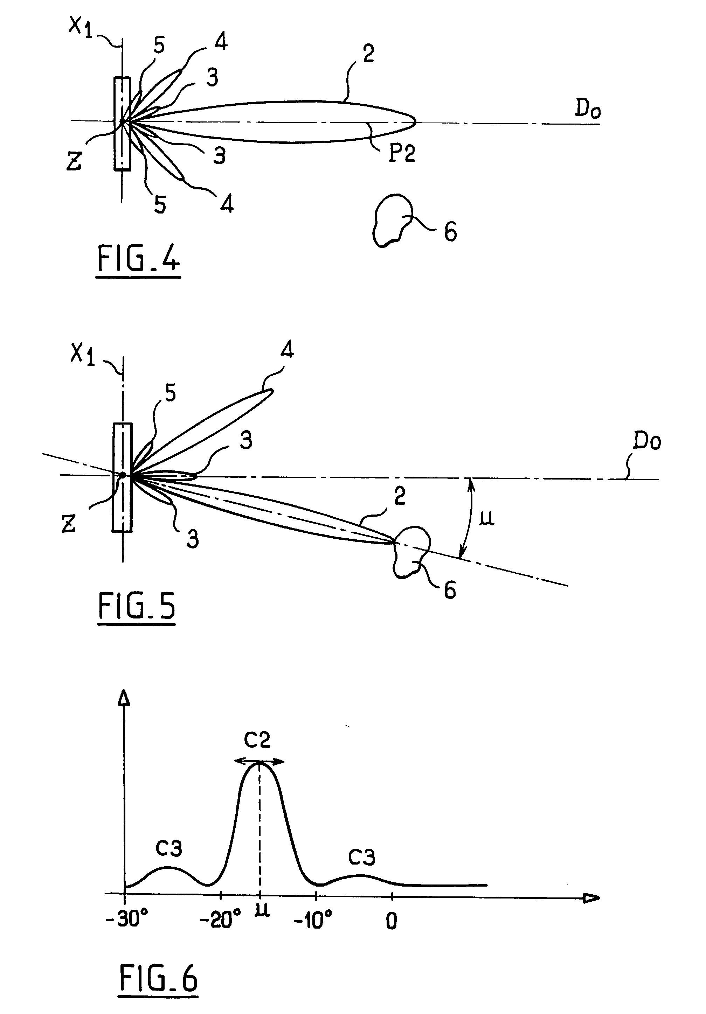

Sur les figures 4, 5 et 7, l'émetteur est représenté en coupe dans le plan II-II.

Sur la figure 4, le plan de tir P2 du lobe principal est perpendiculaire à l'axe X1 car aucun déphasage n'est créé entre les signaux d'excitation des différents transducteurs.

On considère une direction de référence Do comprise dans ce plan, et par rapport à laquelle on souhaite déterminer la position angulaire d'un objet 6.

Aux fins de la mise en oeuvre du procédé selon l'invention, cet objet 6 est assimilé à un point par rapport à la taille des lobes ou est considéré comme présentant un seul point de réflexion maximale.

En créant des déphasages, on balaye l'espace situé en face du capteur, par rotation des plans de tir autour de l'axe Z comme indiqué par la double flèche de la figure 5.

On constate sur cette figure 5 que la distribution spatiale énergétique des lobes se modifie, le lobe 4 inférieur (par rapport au dessin) ayant presque totalement disparu, tandis que le lobe 4 supérieur (par rapport au dessin) s'est agrandi.

La même modification se produit, dans une moindre mesure, avec les lobes 3.

La figure 6 représente le diagramme d'amplitude de l'écho recueilli, par exemple par un des transducteurs inutilisés du capteur, lors de ce balayage, en fonction de l'angle formé entre Do et P2.

Quelle que soit l'hypothèse retenue, à savoir, que l'objet 6 soit assimilé à un point ou qu'il soit considéré comme présentant un seul point de réflexion maximale, cette hypothèse peut être validée en vérifiant que le diagramme d'amplitude de l'écho en fonction de l'angle de balayage correspond bien à la directivité connue de l'émetteur, c'est-à-dire à la distribution connue des lobes principal et secondaires de l'onde émise.

En d'autres termes, si l'on retrouve, sur le diagramme d'amplitude de la figure 6, une variation d'écho reflétant la succession des lobes défilant devant l'objet, on peut vérifier a posteriori que c'est à juste titre que l'objet a été assimilé à un point ou a été considéré comme présentant un unique point de réflexion maximale.

Or, sur cette figure 6, on constate que la présence de l'objet 6 occasionne une réflexion pour chaque lobe, lorsque le plan de tir de celui-ci rencontre ledit objet.

Cette réflexion se traduit par une augmentation de l'amplitude de l'écho recueilli.

On retrouve en effet, sur la figure 6, les crêtes C3, correspondants aux lobes secondaires 3 et la crête C2 correspondant au lobe principal 2.

L'hypothèse concernant l'objet 6 est donc valide.

La détermination du sommet de la crête C2 permet de connaître l'angle u que forme le plan de tir P2 du lobe principal avec la direction de référence Do lorsque le lobe principal rencontre le point de l'objet où la réflexion est maximale, comme représenté à la figure 5.

On peut ainsi connaître avec une grande précision l'angle u formé par la droite Du, passant par le centre de l'émetteur et par ce point de réflexion maximale sur l'objet, et la direction de référence Do.

La connaissance de cet angle u peut s'avérer intéressante lorsqu'il s'agit de positionner un robot mobile par rapport à des points de références connus.

Lorsqu'il s'agit de points de références inconnus, c'est surtout la variation de l'angle u, lors des déplacements du robot mobile, qui, en combinaison avec d'autres repérages, permet de déterminer le déplacement du robot avec une grande précision.

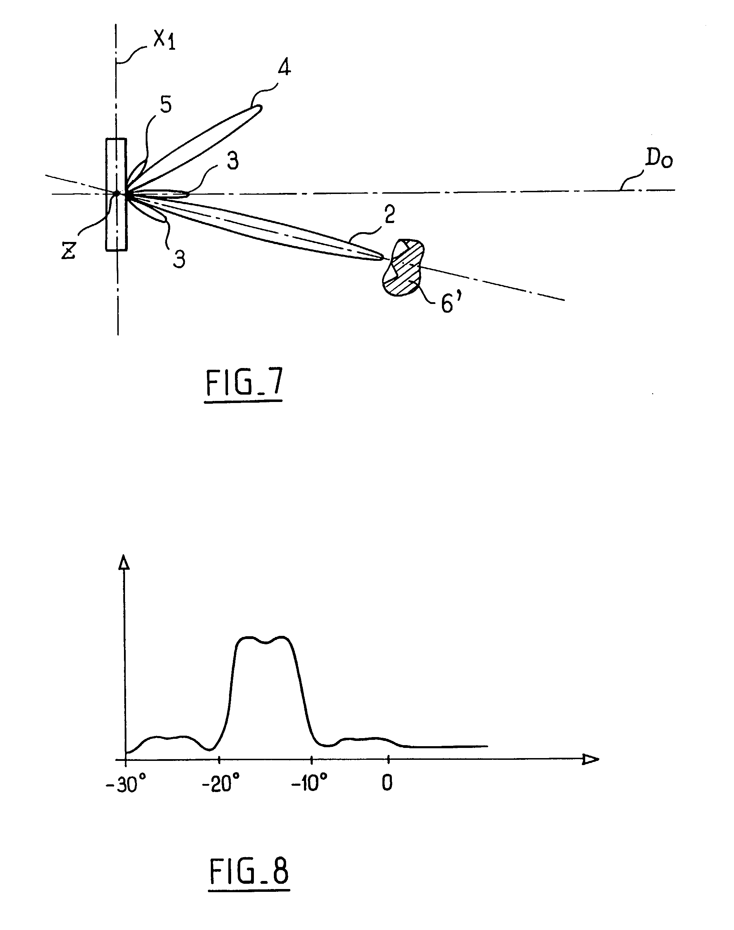

Si l'on effectue le même balayage sur un objet 6' qui présente deux points de réflexion maximale, comme représenté à la figure 7, on obtient le diagramme d'amplitude de l'écho de la figure 8, qui ne reflète plus la distribution connue des lobes de l'onde émise.

Dans ce cas, l'hypothèse selon laquelle l'objet 6' peut être assimilé à un point ou considéré comme ne présentant qu'un point de réflexion maximale est infirmée.

Au vu d'un tel diagramme, on peut affiner l'analyse pour essayer de déterminer la raison pour laquelle le diagramme d'amplitude de l'écho a une telle allure.

Une première méthode consiste à filtrer, dans le signal d'écho reçu en retour, les ondes qui arrivent dans un intervalle de temps donné. On peut ainsi séparer les ondes réfléchies par deux objets qui se trouveraient dans la même direction par rapport à la direction de référence, mais qui seraient placés à des distances différentes de l'émetteur.

Dans le cas présent, ce filtrage temporel ne suffirait pas car les deux points de réflexion maximale de l'objet 6' se situent sensiblement à la même distance de l'émetteur.

Une deuxième méthode consiste à réduire l'angle d'ouverture du lobe principal pour essayer de séparer plus nettement les deux points de réflexion. Mais ces deux méthodes fournissent d'autant plus difficilement de bons résultats que l'objet 6' est éloigné de l'émetteur.

Inversement, on peut appliquer une troisième méthode consistant à élargir l'angle d'ouverture du lobe principal pour que l'objet 6' dans sa globalité puisse être assimilé à un point par rapport à la taille des lobes. Dans ce cas, on diminue la résolution de la mesure.

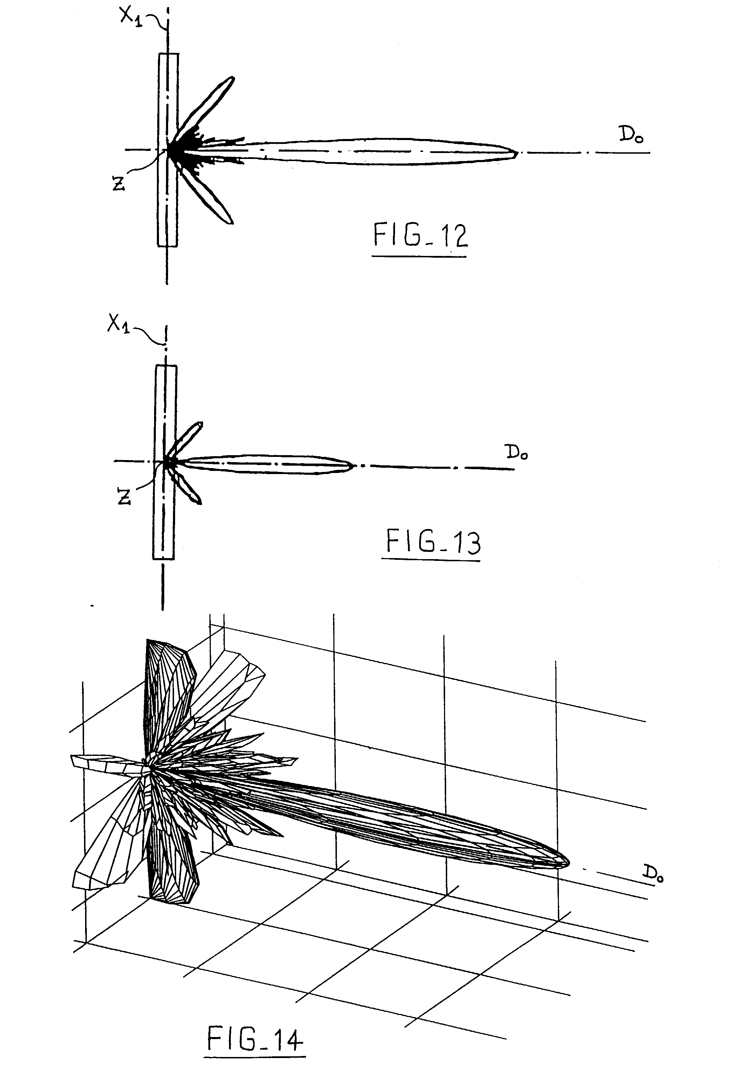

A cette occasion, on peut procéder à une alimentation en puissance pondérée sur plusieurs transducteurs. La figure 12 montre la distribution des ultrasons avec une alimentation en tension d'excitation de même poids sur les sept capteurs de l'axe X1, tandis que la figure 13 montre la distribution des ultrasons avec une alimentation en tension d'excitation à pondération décroissante depuis le centre en direction des extrémités de la rangée des sept transducteurs de l'axe X1. On voit que les transducteurs ainsi excités génèrent un lobe principal dont l'angle d'ouverture est plus grand mais qu'ils génèrent moins de lobes latéraux. Ainsi, on peut changer la distribution de chaque lobe en effectuant une pondération de la tension d'alimentation de chaque transducteur.

Une autre possibilité, utilisant l'émetteur de la figure 1, consiste à exciter tous ou une partie des transducteurs placés sur les axes X1, X2 et X3, ce qui provoque l'émission d'ultrasons dans la direction Y qui est perpendiculaire à X1, X2 et X3, comme représenté sur la figure 14. On voit en effet sur cette figure que le lobe de révolution principal 20 est généré par excitation de chaque transducteur à une fréquence appropriée. A la différence des exemples précédents, dans ce cas, la zone de détection est disponible en trois dimensions.

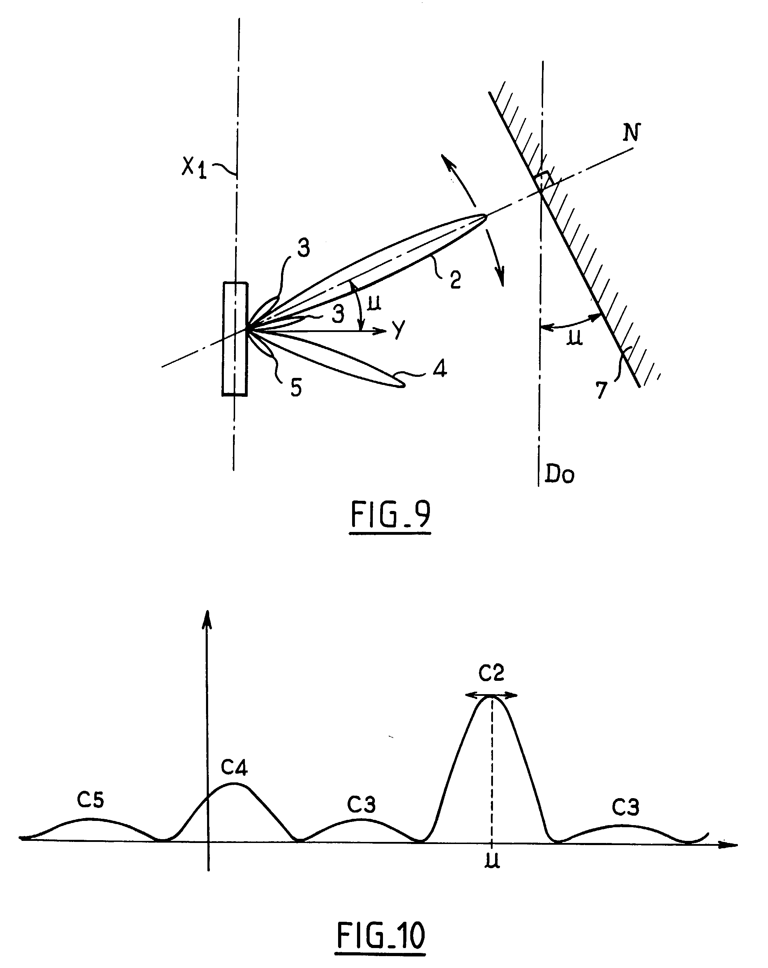

Sur la figure 9, l'émetteur émet le même signal que précédemment en direction d'un mur 7, lisse et plan, sur lequel une onde ultrasonore peut être réfléchie sans être rétrodiffusée.

On considère une direction de référence Do parallèle à l'axe X1.

Lors du balayage, on recueille l'écho du signal comme représenté à la figure 8.

Chaque lobe principal 2 ou secondaire 3, 4, 5 se réfléchit sur le mur lorsqu'il atteint le pied de la normale N au mur passant par le centre de l'émetteur.

Comme précédemment, chaque crête C2 à C5 du signal recueilli correspond à un lobe 2 à 5 du capteur.

En particulier, le lobe principal 2 correspond à la crête C2 la plus haute, dont il suffit de déterminer le sommet pour obtenir l'angle u formé par la normale au mur N et la direction Y.

Cet angle u est également l'angle formé par le mur et la direction de référence Do.

Comme représenté sur la figure 9, ayant déterminé l'axe u, on peut déplacer le robot 8 en mesurant en permanence ce même axe u et en faisant en sorte qu'il demeure constant, ce qui traduit le fait que le robot 8 se déplace selon un axe 9 parallèle au mur 7.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Procédé pour mesurer un angle (u) dans l'espace par rapport à une direction de référence (Do), qui est caractérisé par le fait
- que l'on place un émetteur à réseau de transducteurs (1) dans une position connue par rapport à la direction de référence,
- que l'on excite les transducteurs (1) du réseau de manière à émettre des ondes ultrasonores dans l'air principalement suivant une direction de tir (P2),
- que, par déphasage entre les signaux d'excitation des transducteurs (1) du réseau, on fait varier la direction du tir (P2) pour lui faire balayer une zone d'observation donnée, tout en mesurant l'amplitude de l'écho reçu au voisinage de l'émetteur,
- et que l'on détermine l'angle (u) recherché à partir de la position connue de l'émetteur par rapport à la position de référence (Do), et de la direction du tir (P2) au moment où l'amplitude de l'écho est maximale.

2. Procédé de détermination de la position angulaire d'un objet dans l'espace par rapport à la direction de référence (Do), caractérisé par le fait que l'on place l'émetteur à réseau de transducteurs perpendiculairement à la direction de référence (Do).

3. Procédé de détermination de l'orientation d'une surface sensiblement plane par rapport à la direction de référence (Do), caractérisé par le fait que l'on place l'émetteur à réseau de transducteurs parallèlement à la direction de référence (Do).

4. Procédé selon l'une quelconque des revendications 1 à 3, caractérisé par le fait que l'on utilise un émetteur à réseau de transducteurs à une seule dimension, c'est-à-dire dans lequel une pluralité de transducteurs sont alignés suivant un axe X et sont orientés de manière à émettre chacun une onde sonore dans une direction Y perpendiculaire à l'axe X.

5. Procédé selon l'une quelconque des revendications 1 à 3, caractérisé par le fait que l'on utilise un émetteur à réseau de transducteurs à deux dimensions.

6. Procédé selon la revendication 5, caractérisé par le fait que les transducteurs (1) sont de préférence placés au noeud d'un réseau régulier à mailles triangulaires ou carrées.

7. Procédé selon la revendication 6, caractérisé par le fait que le réseau est constitué par une pluralité d'alignements (X1,X2,X3) de transducteurs, alignements dont les axes se croisent au centre d'un transducteur central commun (1a).

8. Procédé selon l'une quelconque des revendications 1 à 7, caractérisé par le fait que l'on pondère la puissance fournie à chaque transducteur (1) du réseau de transducteurs de l'émetteur, de manière à modifier la distribution de l'onde ultrasonore émise par ledit émetteur.
